# EUROPEAN PATENT APPLICATION

(11) **EP 2 654 278 A1**
(43) Date of publication of application: **23.10.2013**
(21) Application number: 11849256.0
(22) Date of filing: 14.12.2011
(51) Int. Cl.: H04M 3/00

(54) **NETWORK MAINTENANCE SYSTEM, METHOD AND DEVICE**

(30) Priority: 14.12.2010 JP 2010277685
(71) Applicant: NEC Corporation, Tokyo 108-8001 (JP)
(72) Inventor: HARA, Yutaka, Tokyo 108-0073 (JP); KOJIMA, Masahiko, Tokyo 108-8001 (JP)
(74) Representative: MacDougall, Alan John Shaw
(86) International application number: PCT/JP2011/078877
(87) International publication number: WO 2012/081606

(57) **Abstract**

Provided is a system capable of automating a series of recovery and maintenance work executed from occurrence of a malfunction/alarm to recovery from the malfunction/alarm. The system comprises: a first server (203) receiving a notification of a malfunction or an alarm of a communication node on an LTE network from a maintenance console, a second server (211) connected to the first server (203) and executing IP phone private branch exchange, and a third server (221) connected to the first server (203) and executing stock and order management. The first server (203) holds maintenance scenarios corresponding to the malfunction and alarm as data in a storage device. On receipt of a notification of a malfunction or an alarm of a communication node from the maintenance console, the first server (203) determines a maintenance scenario corresponding to the malfunction or the alarm and notifies the second and/or third server of the scenario, a system (210) of the second server (211) arranges a personnel necessary for maintenance and a system (220) of the third server (221) queries about a stock of parts necessary for maintenance, obtains a part from the stock, and orders the part.

## Description

### [Field]

### (REFERENCE TO RELATED APPLICATION)

The present invention is based upon and claims the benefit of the priority of Japanese patent application No. 2010-277685, filed on December 14, 2010, the disclosure of which is incorporated herein in its entirety by reference thereto.

The present invention relates to a communication system. In particular, it relates to a system, a method, and an apparatus for responding to a network malfunction and the like.

### [Background]

LTE (Long Term Evolution) is a mobile communication system whose standardization in progress by 3GPP (Third Generation Partnership Project). In an LTE system, malfunctions of one ore more communication nodes constituting a network are collected to a maintenance console, which is used by a maintenance engineer to monitor malfunctions/alarms. Many of the malfunctions of the communication nodes are hardware-dependent problems. In addition, information about these malfunctions varies per manufacturer that supplies the nodes.

Thus, information about malfunctions of communication nodes manufactured by a manufacturer is collected to a corresponding maintenance console per manufacturer. A maintenance engineer is notified of a malfunction via an output screen of a maintenance console or via an output of log information created by a maintenance console.

Responsive to a notification of the malfunction, the maintenance engineer uses information notified to determine content of the malfunction.

In case of an individual malfunction of a hardware component, the maintenance engineer gives an instruction for replacement, in accordance with a manual or the like.

A construction work department in charge of replacement of a defective component requests the manufacturer of the defective component to repair the replaced defective component, for example.

A material department carries out a stock check for replenishing replacement backup supply. If there is a possibility of a lack of supply, the material department orders the replacement backup supply by using a business system for materials, for example.

If the maintenance engineer cannot determine whether the malfunction is caused by a defective hardware component or cannot determine a solution to the malfunction, the maintenance engineer notifies a technical department of the information.

For example, the technical department contacts a manufacturer of the problematic device which may be a cause for the malfunction and determines a solution to the malfunction, taking into an account the possibility of design failure. In addition, to minimize the influence on services and to prevent reoccurrence, analyses are made and measures are taken.

In addition, in a case where a service significantly goes down, a public system down is caused. Thus, the problem needs to be resolved urgently by the hour, for example, in accordance with the Telecommunications Business Act of the Ministry of Internal Affairs and Communication.

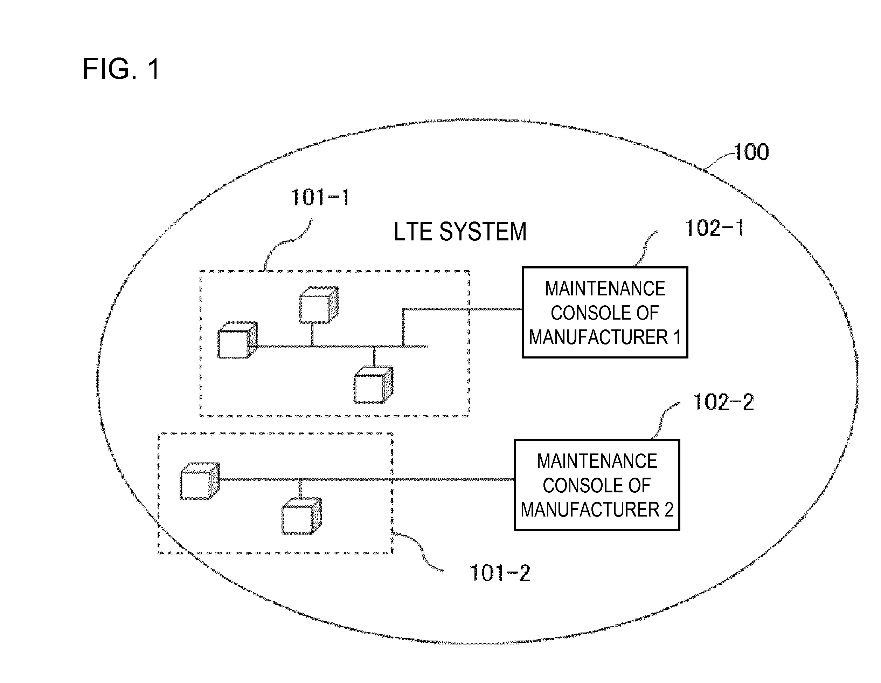

Fig. 1 illustrates a typical system configuration of a network equipment maintenance system. In Fig. 1, an LTE system 100 includes maintenance consoles 102-1 and 102-2 monitoring communication node groups 101-1 and 101-2, respectively. In Fig. 1, the communication node groups 101 and the maintenance consoles 102 are provided per manufacturer. Information about a malfunction/alarm of the communication node group 101-1 is supplied to the maintenance console 102-1, and information about a malfunction/alarm of the communication node group 101-2 is supplied to the maintenance console 102-2 belonging to a system from that of the communication node group 101-1. The maintenance consoles 102-1 and 102-2 each include a man-machine interface for notifying a system maintenance engineer of malfunction information and the like. In Fig. 1, information transfer made by humans operations are not illustrated. The communication node groups 101-1 and 101-2 include an LTE base station (eNodeB (eNB) or Home-eNodeB (HeNB)), for example.

As for a SOAP architecture used in an example of the present invention, reference may be made to PTL 1 and NPL 5.

### [Citation List]

### [Patent Literature]

[PTL 1]
   Japanese Unexamined Patent Application Publication (Translation of PCT Application) No. 2004-534991

### [Non Patent Literature]

[NPL 1]
   Standards body Next Generation Mobile Networks, "NGMN Recommendation on SON and O&M Requirements," December 5, 2008
[NPL 2]
   Standards body Next Generation Mobile Networks, "NGMN Informative List of SON Use Cases," April 17, 2007
[NPL 3]
   3GPP TR 36.902 V9.2.0 (2010-06) Technical Report 3rd Generation Partnership Project; Technical Specification Group Radio Access Network; Evolved Universal Terrestrial Radio Access Network (E-UTRAN); Self-configuring and self-optimizing network (SON) use cases and solutions (Release 9)
[NPL 4]
   3GPP TS 32.500 V10.1.0 (2010-09) Technical Specification 3rd Generation Partnership Project; Technical Specification Group Services and System Aspects; Telecommunication Management; Self-Organizing Networks (SON); Concepts and requirements (Release 10)
[NPL5]
   W3C SOAP v1.2 Part0: Primer April 27, 2007

### [Summary of Invention]

### [Technical Problem]

The following describes problems of the related technique.

Maintenance work is initiated with a maintenance engineer in charge of the maintenance work, as a starting point. In order to achieve recovery from occurrence of a malfunction/alarm, the maintenance engineer needs to have an enormous amount of background knowledge about technically-advanced products and systems. In addition, there are such cases in which maintenance work could require many man hours of maintenance engineers. In addition, training of a maintenance engineer requires considerable time and cost. There is also a possibility that a human error could occur during system recovery work. A malfunction/alarm needs to be handled by a maintenance engineer, namely, manually, from occurrence of the malfunction/alarm to recovery from the malfunction/alarm. In a case wherein an urgent problem occurs, it is necessary to determine a procedure for work of maintenance engineers and handling of persons, from occurrence of the malfunction/alarm to execution of a temporary response. Thus, considerable time may be required to contact persons concerned, for example.

In view of reduction of service stoppage time and maintenance time in the LTE system, it is necessary to reduce the intervention of manual operation.

The present invention has been made in view of the above problems, and an object of the present invention is to provide a system and a method for automating a series of recovery and maintenance work executed from occurrence of a malfunction/alarm to recovery.

### [Solution to Problem]

To solve the above problems, the present invention generally includes the following configurations (though not limited thereto).

According to a first aspect of the present invention, there is provided a maintenance system comprising:
a first server apparatus that receives a malfunction of a communication node provided on a network or an alarm about the network from a maintenance console;
a second server apparatus that is connected to the first server apparatus and executes IP (Internet Protocol) phone private branch exchange; and
a third server apparatus that is connected to the first server apparatus and executes stock and order management,
wherein the first server apparatus holds scenarios of maintenance and recovery corresponding to the malfunction of the communication node and the alarm about the network in advance as data, in a storage device thereof, and
the first server apparatus, on receipt of a notification of a malfunction of the communication node or an alarm about the network from the maintenance console, determines a scenario corresponding to the malfunction of the communication node or the alarm about the network and instructs the second server apparatus and/or the third server apparatus to take a measure based on the scenario,
wherein the second server apparatus comprises
means that arranges a personnel necessary for maintenance via phone or mail, based on the instruction, when instructed by the first server apparatus to take the measure, and
wherein the third server apparatus comprises
means that, when instructed by the first server apparatus to take the measure, queries about a stock of parts necessary for maintenance, and obtains a part from the stock based on the instruction, the means ordering the part if the means determines that ordering the part is necessary.

According to a second aspect of the present invention, there is provided a maintenance method comprising:
a first server that receives a notification of a malfunction of a communication node on a network or a notification of an alarm about the network from a maintenance console, holding maintenance and recovery scenarios corresponding to the malfunction and the alarm as data in a storage device thereof;
the first server, on receipt of a notification of a malfunction or an alarm from the maintenance console, determining a scenario corresponding to the malfunction or the alarm and instructing a second server and/or a third server to take a measure, based on the scenario;
the second server autonomously arranging, when instructed by the first server apparatus to take the measure, a personnel necessary for maintenance, based on the instruction; and
the third server, when instructed by the first server apparatus to take the measure, querying about a stock of parts necessary for maintenance and obtaining a part from the stock based on the instruction, the third server autonomously ordering the part if the third server determines that ordering the part is necessary.

According to a third aspect of the present invention, there is provided a server apparatus that receives a notification of a malfunction of a communication node on a network or a notification of an alarm about a network, from a maintenance console, wherein the server apparatus is connected to an IP-PBX server apparatus executing IP phone private branch exchange and to an SCM processing server apparatus executing stock and order management,
wherein the server apparatus holds maintenance and recovery scenarios corresponding to the malfunction and the alarm as data, in a storage device thereof,
the server apparatus, on receipt of a notification of a malfunction or an alarm from the maintenance console, determines a scenario corresponding to the malfunction or the alarm and instructs the IP-PBX server apparatus and/or the SCM processing server apparatus to take a measure based on the scenario,
the server apparatus causes the IP-PBX server apparatus to arrange a personnel necessary for maintenance, and
the server apparatus causes the SCM processing server apparatus to query about a stock of parts necessary for maintenance and to obtain a part from the stock, the server apparatus causing the SCM processing server apparatus to order the part, if necessary.

### [Advantageous Effects of Invention]

According to the present invention, a series of recovery and maintenance work executed from occurrence of a malfunction/alarm to recovery can be automated.

### [Brief Description of Drawings]

Fig. 1 illustrates a technique related to maintenance of LTE system.
Fig. 2 illustrates a configuration of a system according to an exemplary embodiment of the present invention.
Fig. 3 is a sequence diagram illustrating an operation according to the exemplary embodiment of the present invention.
Fig. 4 is a sequence diagram illustrating an intersystem coordination procedure used when a malfunction is caused according to the exemplary embodiment of the present invention.
Fig. 5 is a sequence diagram illustrating an intersystem coordination procedure when an alarm is caused according to the exemplary embodiment of the present invention.
Fig. 6 illustrates elements in a key database in a SON server according to the exemplary embodiment of the present invention.

### [Description of Embodiments]

The following describes exemplary embodiments of the present invention. In a maintenance system according to the present invention, Self Organizing Networks (SON: see NPLs 3 and 4) that is expected to be used in an LTE system, inter-office telephone system (IP-PBX (Internet-Protocol Private Branch Exchange) system providing an IP telephone network with a PBX function for controlling connection to extension telephones configured on an IP network and to outside public networks) of a customer operating the LTE system, a business system (SCM (Supply Chain Management) system) for managing a stock held by the customer, ordering materials, and delivering materials are connected by an information technology (IT) system.

To realize such IT system, a server in the SON (Self-Organizing Network), a server in the IP-PBX system, and a server in the SCM system are connected by a standard SOAP (Simple Object Access Protocol) interface (see NPL 5, for example) that enables communication among the servers, which are core servers in respective systems, and thus the coordination among these servers are implemented. In SOAP, a message formed by an XML (Extensible Markup Language) document including additional information as an envelope is exchanged by using HTTP (HyperText Transport Protocol) as a communication protocol.

The SON server receives notification of a malfunction or an alarm of a communication node in the LTE system from a maintenance console, communicates with the IP-PBX server via the SOAP interface, and communicates with the SCM server via the SOAP interface. In addition, in accordance with an instruction from the SCM server, the SON server executes control of the LTE system and transmission and reception of information via a maintenance console.

In the present exemplary embodiment, actions for malfunctions/alarms of communication nodes that the SON server is notified of by a maintenance console are previously registered in the SON server. In the SON server, the contents of the malfunctions/alarms of the communication nodes are classified. In order to cope with an occurrence of the malfunction/alarm of a communication node, the SON server selects an action (optimum maintenance response) corresponding to the malfunction/alarm. Next, in accordance with the selected maintenance response, the SON server coordinates with the server in the IP-PBX system and the SCM system to automatically arrange one or more maintenance engineers and obtain one or more parts necessary for part replacement (extraction of parts from the stock, ordering with a manufacturer for parts).

As a result, load on a maintenance engineer for making determination on analysis and recovery is reduced, and the operational expenditure (OPEX) required for maintenance is decreased.

By registering in advance operations necessary when malfunctions and alarms of communication nodes occur in the IP-PBX system and the SCM system, a procedure for coping with a malfunction or an alarm of a communication node is automatically carried out. Thus, time required to cope with such malfunction or alarm of a communication node can be reduced. As a result, a time period during which a service is disconnected in the LTE system can be reduced.

### <Exemplary embodiment 1 >

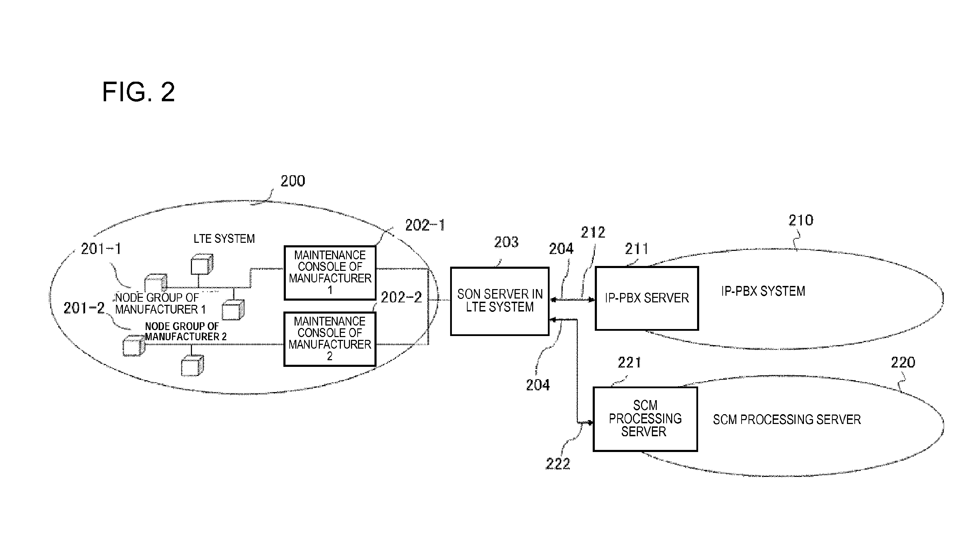

Fig. 2 illustrates a configuration according to an exemplary embodiment of the present invention. Referring to Fig. 2, in the present exemplary embodiment, a SON server 203 autonomously performing management and operation of an LTE network is connected to a standard LTE system maintenance and monitoring configuration including maintenance consoles 202-1 and 202-2 for respectively monitoring communication node groups 201-1 and 201-2 which constitute an LTE system. As for the maintenance consoles 202, reference may be made to NPL 1, and as for the SON server 203, reference may be made to NPLs 2 to 4. The communication node group 201-1 of a manufacturer 1 is connected to the maintenance console 202-1, and the communication node group 201-2 of a manufacturer 2 is connected to the maintenance console 202-2. The maintenance consoles 202-1 and 202-2 are connected to the SON server. It is nodded that the communication node groups 201-1 and 201-2 include an LTE base station (eNodeB (eNB) or Home-eNodeB (HeNB)), for example.

Based on the content of malfunction/alarm information from the maintenance consoles 202-1 and 202-2 belonging to the respective manufacturers, the SON server 203 identifies a problematic and questionable node, a card or a part constituting the node, and determines a repair action (operation).

In the SON server 203, malfunctions are in advance classified into groups, such as into part failure (actions: repairable by part replacement) and design failure that does not clearly show any problematic parts (actions: for example, repairing of software that needs prevention of recurrence). The actions corresponding to classification of the malfunctions are in advance set in a storage unit. The SON server 203 selects an action corresponding to the content of malfunction/alarm information. In addition, the SON server 203 can exchange information with an external server via a SOAP interface 204.

An IP-PBX system 210 is an inter-office telephone system of a customer operating the LTE system, and an IP-PBX server 211 realizes IP telephone private branch exchange (IP extension telephone). Functions implemented in the IP-PBX system 210 depend on a system of the customer. In this example, the IP-PBX system 210 includes a function of making incoming voice calls from and outgoing voice calls to an external line and a direct line function through direct inward dialing based on extension lines of the customer. If possible, the IP-PBX system 210 includes other information transfer functions, such as a phone-answering function and a house-sitting function using voice mail when a user is absent. Other than the above functions using voice, the IP-PBX system 210 may include functions using a messenger, electronic mail, or the like. The IP-PBX server 211 can exchange information with an external server via a SOAP interface 212.

An SCM system 220 is a supply-chain management system of the customer operating the LTE system, and the functions and the use of the SCM system 220 depend on a system of the customer. The SCM system 220 includes a stock management function and can place an order with a manufacturer delivering materials of the LTE system to the customer. An SCM server 221 in the SCM system 220 can exchange information with an external server via a SOAP interface 222.

The following describes an operation according to the present exemplary embodiment. At the time of starting up of the communication nodes 201-1 and 2, the maintenance consoles 202-1 and 2 acquire configuration information on such as hardware configuration, mechanism, software configuration, the number of components, and version of the components of the communication node 201-1 and 2. The maintenance consoles 202-1 and 2 hold such configuration information for each communication node 201-1 and 2.

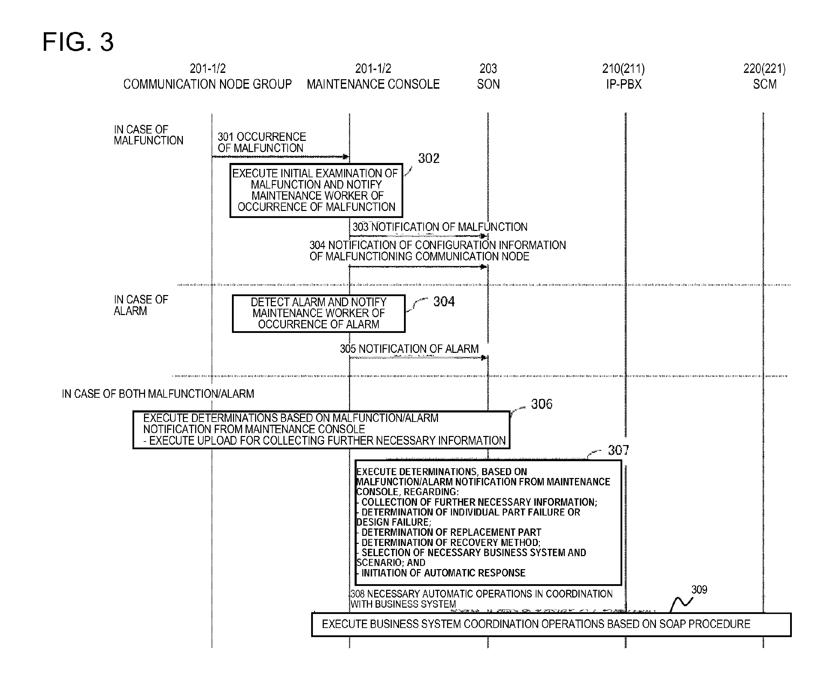

Fig. 3 is a common process sequence according to the present exemplary embodiment. If a malfunction is caused in at least one of the communication node groups 201-1 and 2, the maintenance console 202-1 or 2 is notified of the malfunction (301).

The maintenance console 202-1 or 2 executes initial identification of the malfunction and notifies a maintenance engineer of occurrence of the malfunction (302).

The maintenance console 202-1 or 2 notifies the SON server 203 of the malfunction (303).

The maintenance console 202-1 or 2 notifies the SON server 203 of configuration information of the malfunctioning communication node (304). The configuration information of the communication node is information necessary for a repair operation executed subsequently.

If the maintenance console 202-1 or 2 detects an alarm such as an unexpected decrease in traffic in the LTE system, the maintenance console 202-1 or 2 notifies the SON server 203 of information indicating discrimination of an alarm and a malfunction (305).

In the SON server 203, maintenance scenarios corresponding to malfunctions and alarms are in advance stored as data in a storage unit (not illustrated) of the SON server 203.

As one maintenance scenario, in a case wherein the SON server 203 determines that detailed information for analyzing a malfunction/alarm is needed, the SON server 203 requests the maintenance console 202-1 or 2 for acquisition of the detailed information. Other than the malfunction information and the configuration information of the malfunctioning communication node, if the maintenance scenario corresponding to the malfunction notified by the maintenance console 202-1 or 2 defines reference to further additional information, the SON server 203 requests the maintenance console 202-1 or 2 for acquisition of the additional information.

The maintenance console 202-1 or 2 uploads necessary information from the malfunctioning communication node 201-1 or 2 through a predetermined upload process (306).

After notified by the maintenance console 202-1 or 2 of information about the malfunction/alarm of the communication node, the SON server 203 executes determinations regarding:
- collection of further necessary information;
- determination of individual part failure or design failure;
- determination of a replacement part;
- determination of a recovery method;
- selection of a necessary business system SCM and a recovery scenario; and
- initiation of an automatic response (307).

The SON server 203 executes necessary automatic operations, in coordination with the business system SCM (308). The SON server 203 coordinates with the SCM server 221, using a SOAP procedure, in accordance with the predetermined scenario to automatically respond to the malfunction/alarm (309). Namely, the SON server 203 plays a central role in the operation for coping with the malfunction/alarm, including as follows:
- the maintenance console 202-1 or 2 exchanges information for the LTE system;
- the IP-PBX server 211 exchanges information with the IP-PBX system 210; and
- the SCM processing server 221 communicates with the SCM system.

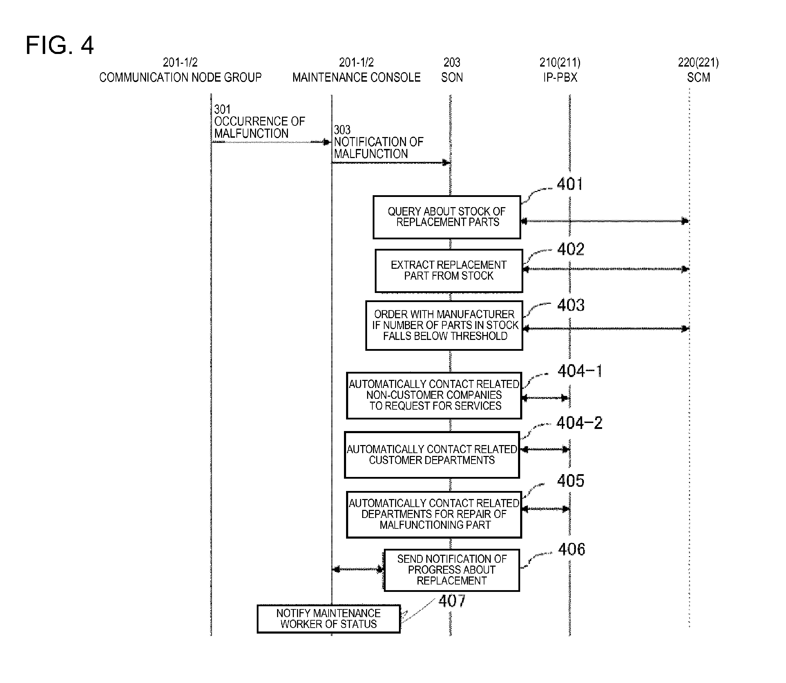

Fig. 4 illustrates a flow of a scenario in which a component of one of the nodes in the communication node groups 201 malfunctions and needs to be replaced. More specifically, Fig. 4 is a sequence diagram illustrating a procedure in step 309 in Fig. 3.

After notified by the maintenance console 202-1 or 2 of a malfunction of a component of one of the nodes in the communication node group 201-1 or 2, the SON server 203 queries the SCM processing server 221 in the SCM system 220 about a stock of replacement parts (401) and gives an instruction for extraction of a replacement part from the stock (402). If the number of the replacement parts in the stock falls below a predetermined threshold after the replacement part is extracted from the stock, the SON server 203 uses the SCM system 220 to order with a manufacturer for the replacement part (403).

Next, the SON server 203 arranges construction/coordination workers necessary for part replacement via the IP-PBX server 211. More specifically, to arrange workers executing replacement, the SON server 203 contacts related customer departments and related non-customer companies taking on these services from the customer through means and numbers such as telephones, voice mail, and electronic mail defined in the scenario (404-1, 404-2). Other than using voice, the SON server 203 automatically creates a telegram to arrange the workers. When automatically creating electronic mail or a telegram, the SON server 203 embeds information about the malfunctioning communication node and replacement part supplied from the maintenance console in relevant columns of a form (skeleton) in advance stored in a predetermined storage unit. When contacting the workers via voice such as by telephone, the SON server 203 automatically converts the information about the malfunctioning communication node and replacement part supplied from the maintenance console into voice and embeds the information in relevant columns of a voice form in advance stored in a predetermined storage unit. However, an arbitrary known method may be used for contacting the workers.

If the replaced part needs to be repaired, the SON server 203 contacts a related customer department to repair via the IP-PBX server 211 through means and numbers (telephone number, mail address) defined in the scenario, such as through telephone, voice mail, and electronic mail. Other than using voice, the SON server 203 automatically creates a telegram, contacts workers, and makes arrangements for repair (405).

When the necessary operation described in the scenario is completed, the SON server 203 transmits progress information about the replacement to the maintenance console 202-1 or 2 (406) to notify the maintenance engineer of the status. The status of the maintenance response carried out in coordination with the IP-PBX system 211 and the SCM system 220 is outputted to an output apparatus such as a monitor screen of the maintenance console 202-1 or 2, so that the maintenance engineer can grasp the status (407).

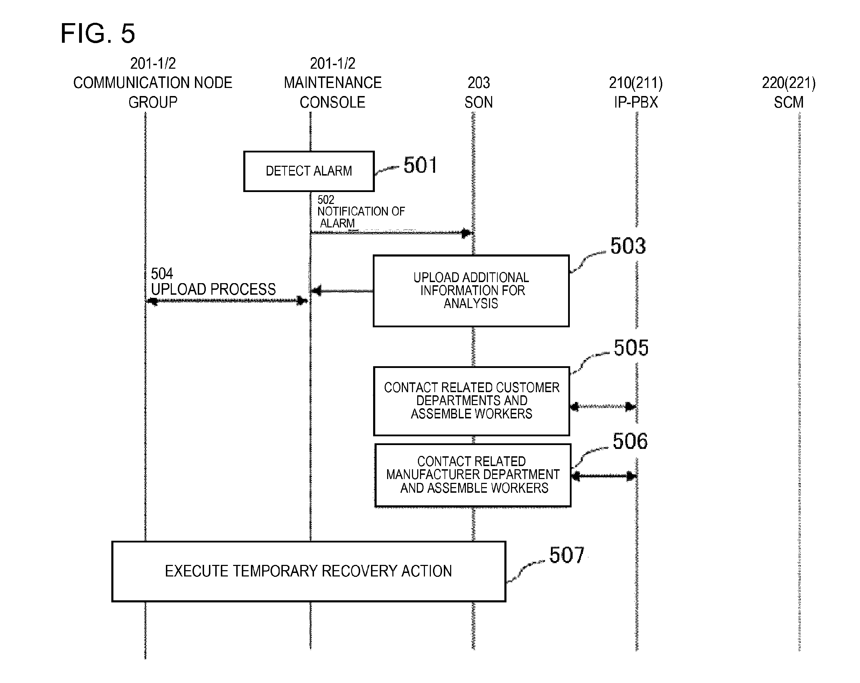

Fig. 5 illustrates a flow in which the maintenance console 202-1 or 2 detects a system alarm. More specifically, Fig. 5 is a detailed sequence in 306 and 309 in Fig. 3.

When detecting an alarm (501), the maintenance console 202-1 or 2 notifies the SON server 203 of the alarm (502).

After notified by the maintenance console 202-1 or 2 of the alarm, if the SON server 203 determines that problem analysis needs to be executed to identify and respond to a problem based on the alarm, the SON server 203 requests the maintenance console 202-1 or 2 for acquisition of further information for the analysis (503).

The maintenance console 202-1 or 2 acquires additional information necessary for the analysis from the communication node group 201-1 or 2 by an upload process from the communication node group 201-1 or 2 (504).

The SON server 203 uses means and numbers (telegrams when voice is not used) in advance defined in a scenario, such as telephone, voice mail, or electronic mail, so as to contact related departments of the customer operating the LTE, related manufacturer departments, etc. and to assemble workers to take measures (505, 506).

In addition, the SON server 203 executes a temporary action, in accordance with the scenario corresponding to the alarm of which the SON server 203 is notified by the maintenance console 202-1 or 2 (507). As a result, service stoppage in the LTE system is shortened to the utmost.

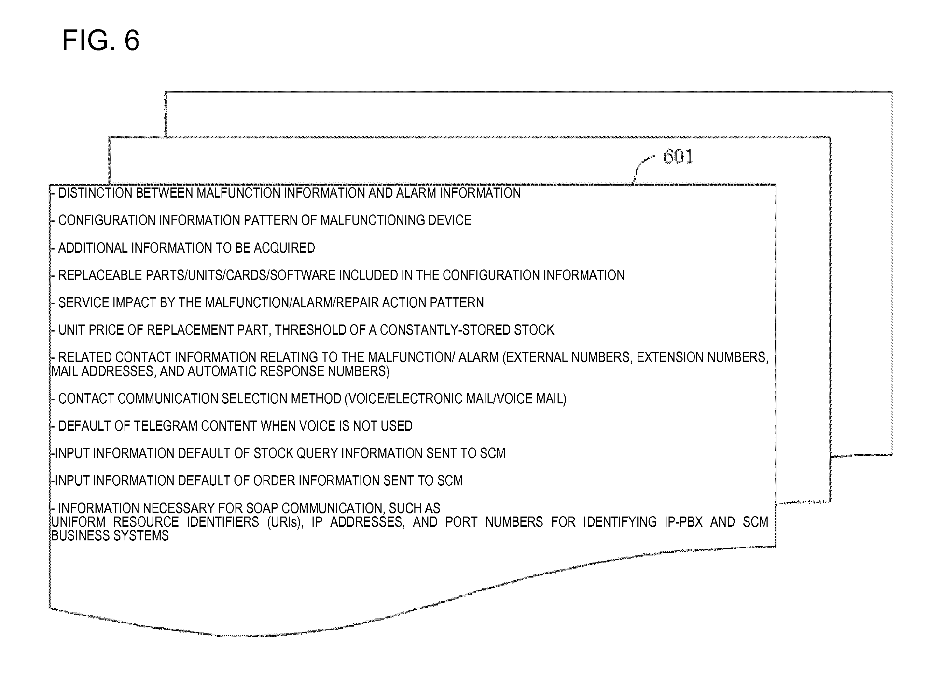

Fig. 6 illustrates contents of a database held in the SON server 203. The database defines LTE system malfunction/alarm information on per a malfunction/alarm basis. Each data record (601) defines information necessary for automatically executing the recovery processes illustrated in Figs. 4 and 5. Each data record (601) defines:
- distinction between malfunction information and alarm information;
- a configuration information pattern of a malfunctioning device; additional information to be acquired;
- replaceable parts/units/cards/software included in the configuration information;
- a service impact indicated by the malfunction/alarm information/a repair action pattern;
- a unit price of a replacement part, a threshold of a contently-stored stock;
- related contact information relating to the malfunction/alarm information (external numbers, extension numbers, mail addresses, and automatic response numbers);
- contact communication selection method (voice/electronic mail/voice mail);
- a telegram content default when voice is not used;
- input information default of stock query information sent to SCM;
- input information default of order information sent to SCM;
- uniform resource identifiers (URIs) and IP addresses for identifying IP-PBX and SCM business systems; and
- information necessary for SOAP communication, such as port numbers.

The data record 601 needs to have contents changed, depending on the customer or the manufacturer providing the LTE system of the customer. Thus, for example, to facilitate change of the data record 601, the database of the SON server 203 may be configured to include industry-standard interface and command systems such as SQL (Structured Query Language). In addition, since information such as telephone numbers of customers is included, known security measures such as a firewall or an unauthorized invasion detection system may be taken for the database, to prevent unauthorized access or the like via the internet or an intranet.

If the SON server 203 can give instructions by using SOAP interfaces, not only business operations in the IP-PBX system 210 and the SCM system 220 but also other business operations can be automated. As a result, further reduction in OPEX can be realized. In addition, if a server system includes a SOAP interface, the server system could be coordinated with the IP-PBX system 210, the SCM system 220, and the SON and could be automated for the sake of reduction in OPEX.

In addition, the present invention is not limited to LTE. The present invention is of course applicable to a 3G radio access network or an EPC (Evolved Packet Core) network including LTE, a 3G radio access network, WLAN (Wireless LAN), and WiMAX (Worldwide Interoperability for Microwave Access). In the case of a 3G radio access network, a communication node group includes, for example, a base station/control station (NodeB/RNC (Radio Network controller)).

The entire disclosures of the above patent literature and non-patent literatures are incorporated herein by reference thereto. Modifications and adjustments of the exemplary embodiments and examples are possible within the scope of the overall disclosure (including the claims) of the present invention and based on the basic technical concept of the present invention. Various combinations and selections of various disclosed elements (including the elements in each of the claims, examples, drawings, etc.) are possible within the scope of the claims of the present invention. That is, the present invention of course includes various variations and modifications that could be made by those skilled in the art according to the overall disclosure including the claims and the technical concept.

### [Reference Signs List]

- 100: LTE system
- 101-1, 101-2: communication node group
- 102-1, 102-2: maintenance console
- 200: LTE system
- 201-1, 201-2: communication node group
- 202-1, 202-2: maintenance console
- 203: SON server in LTE system
- 204: SOAP interface
- 210: IP-PBX system
- 211: IP-PBX server
- 212: SOAP interface with IP-PBX
- 220: SCM system
- 221: SCM processing server
- 222: SOAP interface with SCM server
- 601: data

## Claims

1. A maintenance system, comprising:
a first server apparatus that receives a malfunction of a communication node provided on a network or an alarm about the network from a maintenance console;
a second server apparatus that is connected to the first server apparatus and executes IP (Internet Protocol) phone private branch exchange; and
a third server apparatus that is connected to the first server apparatus and executes stock and order management,
wherein the first server apparatus holds scenarios of maintenance and recovery corresponding to the malfunction of the communication node and the alarm about the network in advance as data, in a storage device thereof, and
the first server apparatus, on receipt of a notification of a malfunction of the communication node or an alarm about the network from the maintenance console, determines a scenario corresponding to the malfunction of the communication node or the alarm about the network and instructs the second server apparatus and/or the third server apparatus to take a measure based on the scenario,
wherein the second server apparatus comprises
means that arranges a personnel necessary for maintenance via phone or mail, based on the instruction, when instructed by the first server apparatus to take the measure, and
wherein the third server apparatus comprises
means that, when instructed by the first server apparatus to take the measure, queries about a stock of parts necessary for maintenance, and obtains a part from the stock based on the instruction, the means ordering the part if the means determines that ordering the part is necessary.

2. The maintenance system according to claim 1, wherein, in a case wherein the first server apparatus determines that further detailed information from the communication node is necessary for analyzing the malfunction of the communication node or the alarm about the network, the first server apparatus requests the maintenance console for acquisition of additional information, and
the maintenance console, on receipt of the request for the additional information from the first server apparatus, acquires information from the communication node and transmits the information to the first server apparatus.

3. The maintenance system according to claim 1, wherein in a case wherein the first server apparatus determines that the malfunction requires repair with a replacement part, the first server apparatus makes arrangements with a repair department for repair via the second server apparatus.

4. The maintenance system according to claim 1, wherein in a case wherein a series of operations defined in the scenario is completed, the first server apparatus transmits progress information about the operations to the maintenance console.

5. The maintenance system according to any one of claims 1 to 4, wherein the network is an LTE (Long Term Evolution) network,
the first server apparatus is a SON (Self-Organizing Network) server,
the second server apparatus is an IP-PBX (Internet-Protocol Private Branch Exchange) server, and
the third server apparatus is an SCM (Supply Chain Management) processing server.

6. A maintenance method comprising:
a first server that receives a notification of a malfunction of a communication node on a network or a notification of an alarm about the network from a maintenance console, holding maintenance and recovery scenarios corresponding to the malfunction and the alarm as data, in a storage device thereof;
the first server, on receipt of a notification of a malfunction or an alarm from the maintenance console, determining a scenario corresponding to the malfunction or the alarm and instructing a second server and/or a third server to take a measure, based on the scenario;
the second server autonomously arranging, when instructed by the first server apparatus to take the measure, a personnel necessary for maintenance, based on the instruction; and
the third server, when instructed by the first server apparatus to take the measure, querying about a stock of parts necessary for maintenance and obtaining a part from the stock based on the instruction, the third server autonomously ordering the part if the third server determines that ordering the part is necessary.

7. The maintenance method according to claim 6, comprising:
the first server requesting the maintenance console for acquisition of additional information, in a case wherein the first server determines that further detailed information from the communication node is necessary for analyzing the malfunction or the alarm; and
the maintenance console, on receipt of the request for the additional information from the first server apparatus, acquiring information from the communication node and transmitting the information to the first server apparatus.

8. The maintenance method according to claim 6, comprising:
the first server making arrangements with a repair department for repair via the second server, in a case wherein the first server determines that the malfunction requires repair with a replacement part.

9. The maintenance method according to claim 6, comprising:
the first server transmitting progress information to the maintenance console, when a series of operations defined in the scenario is completed.

10. A server apparatus that receives a notification of a malfunction of a communication node on a network or a notification of an alarm about a network, from a maintenance console, wherein the server apparatus is connected to an IP-PBX server apparatus executing IP phone private branch exchange and to an SCM processing server apparatus executing stock and order management,
wherein the server apparatus holds maintenance and recovery scenarios corresponding to the malfunction and the alarm as data, in a storage device thereof,
the server apparatus, on receipt of a notification of a malfunction or an alarm from the maintenance console, determines a scenario corresponding to the malfunction or the alarm and instructs the IP-PBX server apparatus and/or the SCM processing server apparatus to take a measure based on the scenario,
the server apparatus causes the IP-PBX server apparatus to arrange a personnel necessary for maintenance, and
the server apparatus causes the SCM processing server apparatus to query about a stock of parts necessary for maintenance and to obtain a part from the stock, the server apparatus causing the SCM processing server apparatus to order the part, if necessary.
